# EUROPEAN PATENT SPECIFICATION

(11) **EP 1 342 942 B1**
(45) Date of publication and mention of the grant of the patent: **10.11.2004**
(21) Application number: 03003385.6
(22) Date of filing: 14.02.2003
(51) Int. Cl.: F16K 31/60

(54) **Device for fixing a faucet handle**
Befestigungsvorrichtung für Armaturgriff
Dispositif de fixation pour poignée de robinet

(30) Priority: 05.03.2002 IT MI20020122
(43) Date of publication of application: 10.09.2003
(73) Proprietor: MAMOLI ROBINETTERIA S.p.A., I-20084 LACCHIARELLA (Milano) (IT)
(72) Inventor: Pesenti, Guido, 20084 Lacchiarella (IT)
(74) Representative: Cicogna, Franco

(56) References cited:
- DE-A- 1 675 417
- US-A- 2 622 904
- US-A- 3 250 148
- US-A- 3 791 402
- US-A- 4 961 443

## Description

### BACKGROUND OF THE INVENTION

The present invention relates to a device for fixing at a set angular position the handle of a faucet or the like.

Faucets having driving handles for controlling heated water and cold water delivery, the faucet handles being opposite to one another, are already available.

In these prior faucets, as standard opening/closing screw elements associated with ceramics disc having a broached drive rod are used, great difficulties are encountered for properly aligning, in their closure positions, the operating handles.

In order to overcome the above mentioned problem, operating screws have been already designed, arranged to provide the desired alignment of the operating handles.

However, the above mentioned prior solutions are very expensive and require special making methods, which also contribute to the increase of the production cost.

### SUMMARY OF THE INVENTION

Accordingly, the aim of the present invention is to solve the above mentioned problem, by providing a device for fixing, at a set angular position, the operating handle on faucets having standard screw elements, of the ceramics disc type, in which it is possible to accurately locate the operating handles even if the broached rod is not provided with rod marks, and in which the layings of the screw threads and of the recess therefor are variable.

A device as disclosed in the preamble of claim 1 is shown in document US 3 250 148.

A main object of the present invention is to provide such a device allowing to perform an assembly of very high angular precision, without the need of using specialized assembling tools.

Another object of the present invention is to provide such a device which is very reliable and safe in operation.

Yet another object of the present invention is to provide such a fixing device for fixing a faucet handle at a set angular position, which is very competitive from a mere economic standpoint.

According to one aspect of the present invention, the above mentioned aim and objects, as well as yet other objects, which will become more apparent hereinafter, are achieved by a device for fixing at a set angular position a faucet handle, characterized in that said device comprises an insert element having an inner broached portion, with an even number of teeth, which can be coupled to a broached portion of a control rod of a valve element and an outer broached portion, having an odd number of teeth, which can be coupled to a broached recess defined by a valve element driving handle.

### BRIEF DESCRIPTION OF THE DRAWINGS

Further characteristics and advantages of the present invention will become more apparent herein after from the following detailed disclosure of a device for fixing, at a set angular position, a faucet handle, which is illustrated, by way of an indicative, but not limitative, example, in the figures of the accompanying drawings, where:

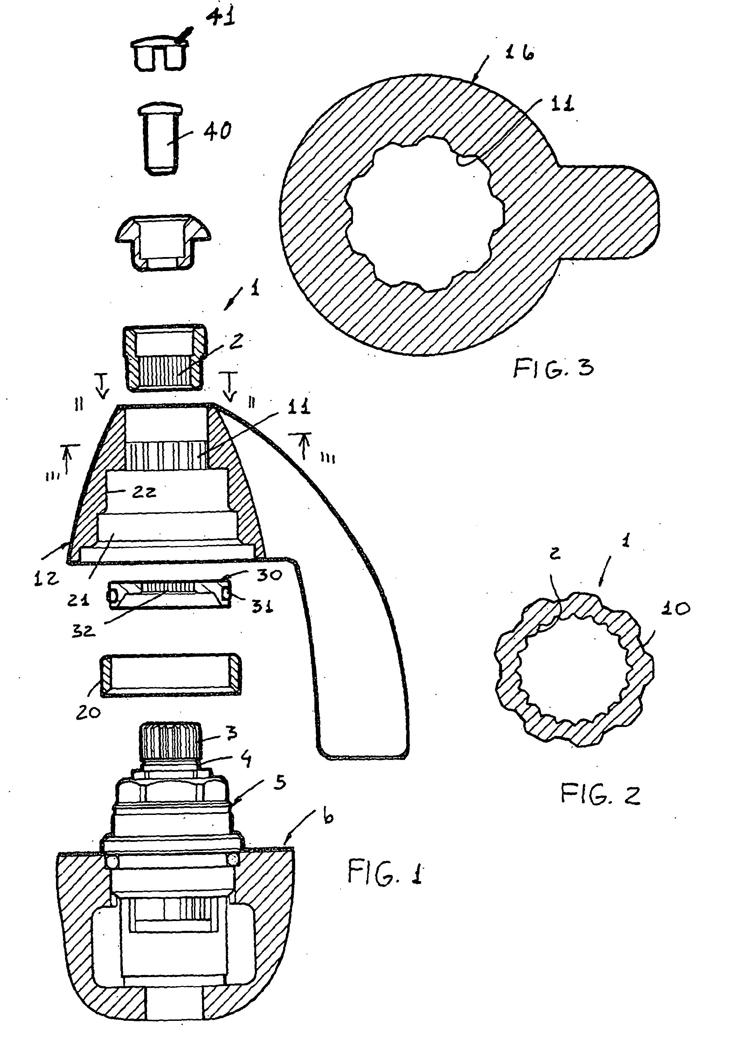

Figure 1 is a schematic exploded cross-sectional view illustrating the fixing device according to the invention;
Figure 2 is a cross-sectional view, substantially taken along the section line II-II of figure 1;
Figure 3 is a further cross-sectional view, substantially taken along the cross line III-III of figure 1;

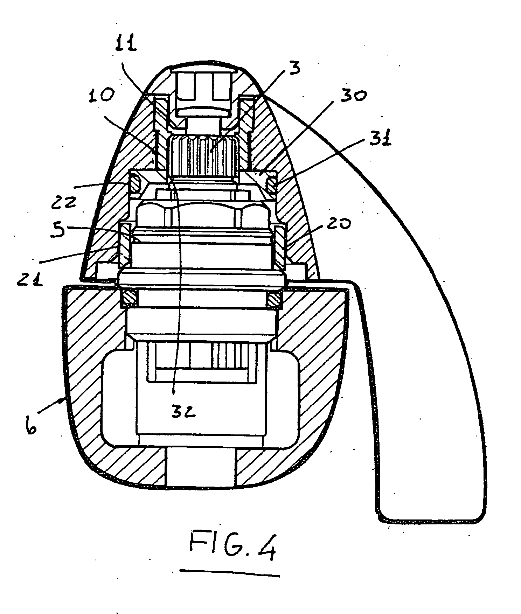

Figure 4 is a further cross-sectional view illustrating the fixing device according to the present invention, as assembled on a faucet;

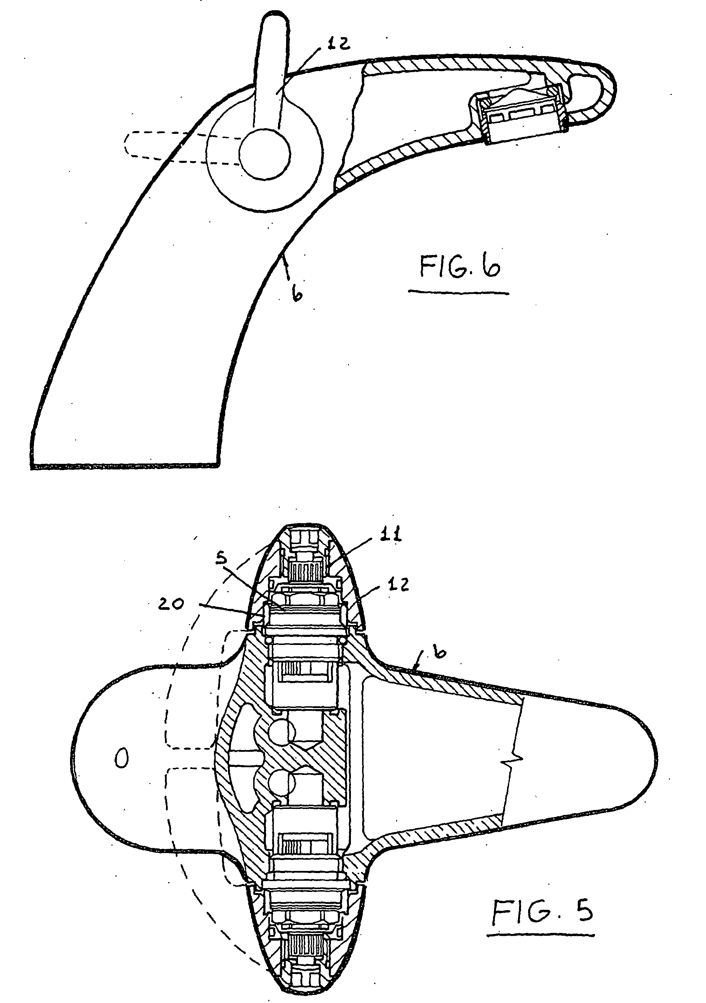

Figure 5 is a further schematic, top plan and cross-sectional view, illustrating a mixing faucet, thereon a fixing device according to the present invention has been assembled;

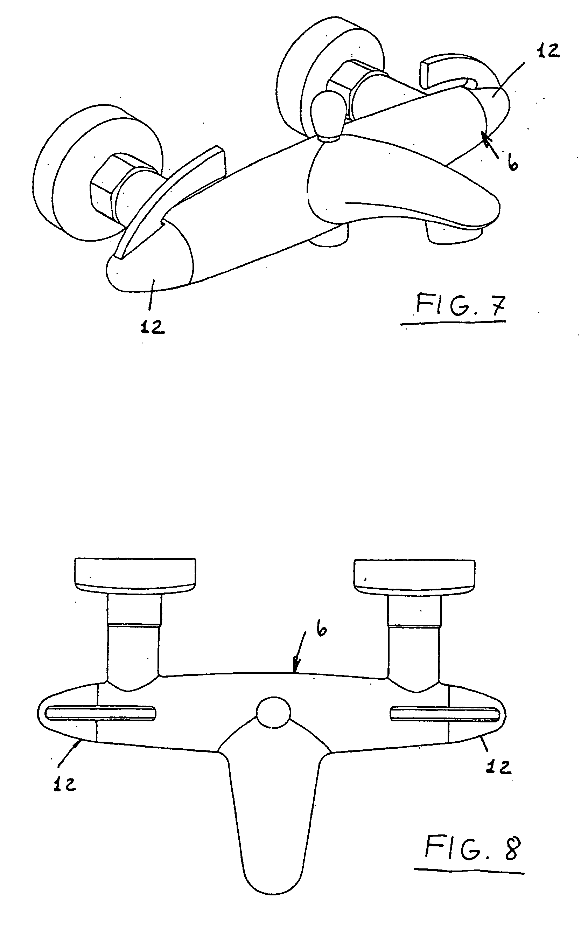

Figure 6 is a side elevation view, as partially broken away, illustrating a mixing faucet;
Figure 7 is a further schematic view illustrating a mixing faucet thereon is mounted a fixing device according to the present invention, in perspective; and
Figure 8 is a top plan view showing the mixing faucet illustrated in figure 7.

### DESCRIPTION OF THE PREFERRED EMBODIMENTS

With reference to the above mentioned figures, the device for fixing at a set angular position a handle, specifically designed for faucets and the like, comprises an insert element, generally indicated by the reference number 1, having an inner broached portion 2 which comprises an even number teeth and can be coupled to a broached portion 3, defined on a control or drive rod 4 for driving a ceramics disc valve element, which can be coupled to a faucet body, generally indicated by the reference number 6.

The insert element 1 comprises, in turn, an outer broached portion 10, having an odd number of teeth, and which can be coupled or engaged in a corresponding broached recess 11, which is defined inside a handle 12, for controlling or driving the valve element 5.

For coupling said handle to the valve element 5, a guide ring element 20 is provided, said guide ring element 20 being engageable on the outer surface of the valve element and being adapted to be arranged at a first annular recess 21, defined by said handle 12.

A handle bearing disc, generally indicated by 30, is moreover provided, said disc having a perimetrical sealing gasket 31, which can be engaged with a second recess 22 defined inside said handle 12 and a broached hole 32 allowing it to pass through the broached portion 3 of the valve element.

The specifically designed arrangement of the teeth, defined by the insert element 1, allows to provide a precision angular coupling of the handle to the valve element 5.

In fact, by using a standard valve element having a broached portion with an even number of teeth Z equal to 20, the angle between a tooth and another tooth, as provided on the mating inner broached portion 2, will correspond to 18°.

By providing an outer broached portion 10 with an odd number of teeth Z corresponding to 9, the angle between a tooth and an adjoining tooth will be of 40°.

With the above disclosed arrangement, the angle formed through a 360° arch, between a tooth of the inner broached portion 2 and a tooth of the outer broached portion 10, will vary from 0° to 16°, with offsets of 2°.

Consequently, since the insert element 1, as it is coupled with the broached portion 3 of the control rod 4 of the valve element 5, can turn through nine positions and at each position, the angle between an outer tooth and an inner tooth varies from 0° to 18° with offsets of 2° it will be possible to locate the control handle with respect to a tooth of the inner broached portion of the insert 1 with an offset or displacement of only 2°.

Moreover, since the insert element is mounted and coupled on the control rod, the handle will be radially located on the control or drive rod with offsets or displacements of only 2° and not of 18°, as it would occur if the insert element 1 would be lacking.

To assemble the handle at a desired set angular position, independently from the closing position of the broached rod of the standard screw element of the valve element 5, the valve element 5 will be at start threaded on the faucet body 6, and the broached rod 4 will be turned to the closure or closing position.

Then, the guide ring element 20 is properly assembled, and the handle 12 bearing disc 30 is engaged on the rod or stem of the screw element.

Then, the handle 12 will be assembled, which will be guided by the ring element 20 and will bear on the handle bearing disc 30.

Then, the handle will be radially arranged so as to set it at the desired angular position.

After having performed the above mentioned preliminarily steps, by holding in its desired position the handle, the insert element 1 will be engaged, by radially searching the better coupling between the broached portion 3 of the rod 4 of the valve element 5, and the inner broached portion 2 of the handle.

After having performed this operation, the coupling will be made stable by the locking screw 40 and, finally, it will be possible to further apply a closure plug 41.

From the above disclosure it should be apparent that the invention fully achieves the intended aim and objects.

In particular, the fact is to be pointed out that a device has been provided which, by using an intermediate insert element, allows to assure a precision angular position, which can be properly preselected, while using a standard valve element or broached screw element.

In practicing the invention, the used materials, provided that they are compatible to the intended application, as well as the contingent size and shapes, can be any, depending on requirements.

## Claims

1. A device for fixing at a set angular position a faucet handle, comprising an insert element (1) having an inner broached portion (2) which can be coupled to a broached portion (3) of a control rod (4) of a valve element, **characterized in that** said insert element (1) further comprises an outer broached portion (10), having an odd number of teeth, which can be coupled to a broached recess (11) defined by a valve element (5) driving handle (12), and said inner broached portion (2) has an even number of teeth.

2. A device for fixing a faucet handle, according to the preceding claim, **characterized in that** said inner broached portion (2) is matched with the broached portion of the control rod, and that said outer broached portion (10) is matched with said broached recess (11).

3. A device for fixing a faucet handle, according to the preceding claims, **characterized in that** said inner broached portion (2) has a number Z of teeth equal to 20, and the outer broached portion (10) has a number Z of teeth equal to 9, to provide an angular positioning with intervals or steps of 2°

4. A device for fixing a faucet handle, according to one or more of the preceding claims, **characterized in that** said device comprises a guide ring (20) arranged about said valve elementand engageable in a first annular recess (21) defined by said handle (12).

5. A device for fixing a faucet handle, according to one or more of the preceding claims, **characterized in that** said device comprises a handle bearing disc (30) which is engageable in a second recess (22) defined inside said handle, and holding therein a perimetrical annular gasket and being provided with a broached hole (32) engageable with the broached portion (3) of the control rod (4).

6. A device for fixing a faucet handle, according to one or more of the preceding claims, **characterized in that** said device further comprises a locking screw (40) for clamping said insert element (1) on said handle (12) and for clamping said handle (12) on said screw element.

7. A device for fixing a faucet handle, according to one or more of the preceding claims, **characterized in that** said insert element (1) allows said handle (12) of said valve element (5) to be precisely angularly coupled, while using a standard valve element having a broached portion with a number Z of teeth equal to 20, the angle between a tooth and an adjoining tooth provided on the inner mating broached portion 2 corresponding to 18°.

8. A device for fixing a faucet handle, according to one or more of the preceding claims, **characterized in that**, with said outer broached portion (10) including an odd number Z of teeth equal to 9, the angle between a tooth and an adjoining tooth is of 40°.

9. A device for fixing a faucet handle, according to one or more of the preceding claims, **characterized in that** the angle formed through an arch of 360° between a tooth of the inner broached portion (2) and a tooth of the outer broached portion (10) varies from 0 to 16°, with steps of 2°.

10. A device for fixing a faucet handle, according to one or more of the preceding claims, **characterized in that** said insert element (2) is coupled with said broached portion (3) of said control rod (4) and said valve element (5) and can turn through nine positions; at each position the angle between an outer tooth and an inner tooth varying from 0° to 18°, with steps of 2°, thereby allowing to locate the handle, with respect to a tooth of the inner broached portion (2) of the insert element (1), with a step or offset of only 2°.

11. A device for fixing a faucet handle, according to one or more of the preceding claims, **characterized in that** said insert element is assembled by coupling on said control rod, and said handle (15) is radially arranged on said control rod, with offsets or displacement steps corresponding to only 2° and not to 18°, as it would occur if the insert element (1) would be lacking.

## Patentansprüche

1. Vorrichtung zum Fixieren in einer winkelförmigen Position eines Wasserhahngriffs, umfassend ein Einsatzelement (1) mit einem innen gezahnten Teil (2), das mit einem gezahnten Teil (3) einer Gewindestange (4) eines Ventilelements verbunden werden kann, **dadurch gekennzeichnet, dass** das genannte Einsatzelement (1) weiter einen außen gezahnten Teil (10) mit einer ungeraden Anzahl von Zähnen umfasst, der mit einer gezahnten Aussparung (11) verbunden werden kann, die durch ein Ventilelement (5) und einen Antriebsgriff (12) definiert ist, und dass der genannte innen gezahnte Teil (2) über eine gerade Anzahl von Zähnen verfügt.

2. Vorrichtung zum Fixieren eines Wasserhahngriffs nach dem vorstehenden Anspruch, **dadurch gekennzeichnet, dass** der genannte innen gezahnte Teil (2) mit dem gezahnten Teil der Gewindestange zusammenpasst, und dass der genannte außen gezahnte Teil (10) mit der genannten gezahnten Aussparung (11) zusammenpasst.

3. Vorrichtung zum Fixieren eines Wasserhahngriffs nach den vorstehenden Ansprüchen, **dadurch gekennzeichnet, dass** der genannte innen gezahnte Teil (2) eine Anzahl Z von Zähnen entsprechend 20 hat, und dass der außen gezahnte Teil (10) eine Anzahl Z von Zähnen entsprechend 9 hat, um eine winkelförmige Positionierung mit Abständen oder Stufen von 2° bereit zu stellen.

4. Vorrichtung zum Fixieren eines Wasserhahngriffs nach einem oder mehreren der vorstehenden Ansprüche, **dadurch gekennzeichnet, dass** die genannte Vorrichtung einen Führungsring (20) umfasst, der um das genannte Ventilelement herum angeordnet und in einer ersten durch den genannten Griff (12) definierten ringförmigen Aussparung (21) eingreifbar ist.

5. Vorrichtung zum Fixieren eines Wasserhahngriffs nach einem oder mehreren der vorstehenden Ansprüche, **dadurch gekennzeichnet, dass** die genannte Vorrichtung eine Griff-Lagerscheibe (30) umfasst, die in einer im Inneren des genannten Griffs definierten zweiten Aussparung (22) eingreifbar ist, und darin einen umkreisenden, ringförmigen Dichtring hält, und mit einem gezahnten Loch (32) ausgestattet ist, das in dem gezahnten Teil (3) der Gewindestange (4) eingreifbar ist.

6. Vorrichtung zum Fixieren eines Wasserhahngriffs nach einem oder mehreren der vorstehenden Ansprüche, **dadurch gekennzeichnet, dass** die genannte Vorrichtung weiter eine Klemmschraube (40) zum Festklemmen des genannten Einsatzelements (1) am genannten Griff (12) sowie zum Festklemmen des genannten Griffs (12) an dem genannten Schraubenelement, umfasst.

7. Vorrichtung zum Fixieren eines Wasserhahngriffs nach einem oder mehreren der vorstehenden Ansprüche, **dadurch gekennzeichnet, dass** das genannte Einsatzelement (1) dem genannten Griff (12) des genannten Ventilelements (5) ermöglicht, präzise winkelförmig verbunden zu werden, wobei ein übliches Ventilelement mit einem gezahnten Teil mit einer Anzahl Z von Zähnen entsprechend 20 verwendet wird, wobei der Winkel zwischen einem Zahn und einem auf dem inneren zusammenpassenden gezahnten Teil 2 bereitgestellten, benachbarten Zahn einem Winkel von 18° entspricht.

8. Vorrichtung zum Fixieren eines Wasserhahngriffs nach einem oder mehreren der vorstehenden Ansprüche, **dadurch gekennzeichnet, dass** bei dem genannten außen gezahnten Teil (10), einschließlich einer ungleichen Anzahl Z von Zähnen entsprechend 9, der Winkel zwischen einem Zahn und einem benachbarten Zahn 40° beträgt.

9. Vorrichtung zum Fixieren eines Wasserhahngriffs nach einem oder mehreren der vorstehenden Ansprüche, **dadurch gekennzeichnet, dass** der durch einen Bogen von 360° gebildete Winkel zwischen einem Zahn des innen gezahnten Teils (2) und einem Zahn des außen gezahnten Teils (10) in Stufen von jeweils 2° zwischen 0 bis 16° variiert.

10. Vorrichtung zum Fixieren eines Wasserhahngriffs nach einem oder mehreren der vorstehenden Ansprüche, **dadurch gekennzeichnet, dass** das genannte Einsatzelement (2) mit dem genannten gezahnten Teil (3) der genannten Gewindestange (4) und dem genannten Ventilelement (5) verbunden ist, und in neun Positionen gedreht werden kann; wobei in jeder Position der Winkel zwischen einem äußeren Zahn und einem inneren Zahn in Stufen von jeweils 2° zwischen 0° bis 18° variiert, wodurch der Griff bezüglich eines Zahns des innen gezahnten Teils (2) des Einsatzelements (1) bei einer Stufe oder einem Versatz von jeweils nur 2° fixiert wird.

11. Vorrichtung zum Fixieren eines Wasserhahngriffs nach einem oder mehreren der vorstehenden Ansprüche, **dadurch gekennzeichnet, dass** das genannte Einsatzelement durch das Verbinden mit der genannten Gewindestange montiert ist, und dass der genannte Griff (15) radial auf der genannten Gewindestange angeordnet ist, mit einem Versatz oder einer Abstandsstufe von jeweils entsprechend 2° und nicht bis 18°, wie es der Fall wäre, wenn das Einsatzelement (1) unzulänglich wäre.

## Revendications

1. Un dispositif pour fixer à une position angulaire déterminée une poignée de robinet de puisage, comprenant un élément formant insert (1) ayant une partie interne brochée (2), qui peut être couplée à une partie brochée (3) d'une tige de commande (4) d'un élément formant vanne, **caractérisé en ce que** ledit élément formant insert (1) comprend en outre une partie externe brochée (10) ayant un nombre impair de dents, qui peut être couplée à un évidement broché (11) défini par une poignée d'actionnement (12) d'élément formant vanne (5) et ladite partie interne brochée (2) a un nombre pair de dents.

2. Un dispositif pour fixer une poignée de robinet de puisage selon la revendication précédente, **caractérisé en ce que** ladite partie interne brochée (2) est adaptée à la partie brochée de la tige de commande, et **en ce que** ladite partie externe brochée (10) est adaptée audit évidement broché (11).

3. Un dispositif pour fixer une poignée de robinet de puisage selon les revendications précédentes, **caractérisé en ce que** ladite partie interne brochée (2) a une nombre Z de dents égal à 20, et la partie externe brochée (10) a un nombre Z de dents égal à 9, pour fournir un positionnement angulaire avec des intervalles ou crans de 2 degrés.

4. Un dispositif pour fixer une poignée de robinet de puisage selon une ou plusieurs des revendications précédentes, **caractérisé en ce que** ledit dispositif comprend un anneau de guidage (20) disposé autour dudit élément formant vanne et engageable dans un premier évidement annulaire (21) défini par ladite poignée (12).

5. Un dispositif pour fixer une poignée de robinet de puisage selon une ou plusieurs des revendications précédentes, **caractérisé en ce que** ledit dispositif comprend une disque de support de poignée (30) qui est engageable dans un second évidement (22) défini à l'intérieur de ladite poignée et y maintenant un joint annulaire circonférentiel et pourvu d'un trou broché (32) s'engageant avec la partie brochée (3) de la tige de commande (4).

6. Un dispositif pour fixer une poignée de robinet de puisage selon une ou plusieurs des revendications précédentes, **caractérisé en ce que** ledit dispositif comprend en outre une vis de blocage (40) pour serrer ledit élément formant insert (1) sur ladite poignée (12) et pour serrer ladite poignée (12) sur ledit élément formant vis.

7. Un dispositif pour fixer une poignée de robinet de puisage selon une ou plusieurs des revendications précédentes, **caractérisé en ce que** ledit élément formant insert (1) permet à ladite poignée (12) dudit élément formant vanne (5) d'être couplé angulairement avec précision, alors qu'en utilisant un élément formant vanne standard ayant une partie brochée avec un nombre Z de dents égal à 20, l'angle entre une dent et une dent voisine se trouvant sur la partie interne brochée respective (2) correspond à 18 degrés.

8. Un dispositif pour fixer une poignée de robinet de puisage selon une ou plusieurs des revendications précédentes, **caractérisé en ce que**, avec ladite partie externe brochée (10) comprenant un nombre impair Z de dents égal à 9, l'angle entre une dent et une dent voisine est de 40 degrés.

9. Un dispositif pour fixer une poignée de robinet de puisage selon une ou plusieurs des revendications précédentes, **caractérisé en ce que** l'angle formé suivant un arc de 360 degrés entre une dent de la partie interne brochée (2) et une dent de la partie externe brochée (10) varie de 0 à 16 degrés, par crans de 2 degrés.

10. Un dispositif pour fixer une poignée de robinet de puisage selon une ou plusieurs des revendications précédentes, **caractérisé en ce que** ledit élément formant insert (2) est couplé avec ladite partie brochée (3) de ladite tige de commande (4) et ledit élément formant vanne (5) et peut tourner suivant neuf positions ; à chaque position, l'angle entre une dent extérieure et une dent intérieure varie de 0 à 18 degrés, par crans de 2 degrés, permettant ainsi de positionner la poignée, par rapport à une dent de la partie interne brochée (2) de l'élément formant insert (1), avec un cran ou décalage de seulement 2 degrés.

11. Un dispositif pour fixer une poignée de robinet de puisage selon une ou plusieurs des revendications précédentes, **caractérisé en ce que** ledit élément formant insert est assemblé par couplage sur ladite tige de commande, et ladite poignée (15) est disposée radialement sur ladite tige de commande, avec des décalages ou crans de déplacement correspondant seulement à 2 degrés et non à 18 degrés, comme cela serait le cas si l'élément formant insert (1) était manquant.
